# EUROPÄISCHE PATENTSCHRIFT

(11) **EP 0 802 594 B1**
(45) Veröffentlichungstag und Bekanntmachung des Hinweises auf die Patenterteilung: **29.12.2004**
(21) Anmeldenummer: 97106354.0
(22) Anmeldetag: 17.04.1997
(51) Int. Cl.: H02B 1/06

(54) **Abdeckstreifen**
Cover strips
Bandes d'obturation

(30) Priorität: 17.04.1996 DE 29606740 U
(43) Veröffentlichungstag der Anmeldung: 22.10.1997
(73) Patentinhaber: ABN Werner Braun GmbH, 74196 Neuenstadt (DE)
(72) Erfinder: Braun, Andreas, 74196 Neuenstadt (DE)
(74) Vertreter: Freischem, Stephan, Dipl.-Ing.

(56) Entgegenhaltungen:
- DE-A- 3 302 530
- DE-U- 9 305 859

## Beschreibung

Die Erfindung betrifft einen Abdeckstreifen zum Verschließen von in Frontplatten befindlichen Öffnungen von elektrischen Zähler- und Verteilerschränken, mit rückseitig angeordneten und paarweise einander zugeordneten Halteelementen zum Hintergreifen der beiden die Öffnung in der Frontplatte begrenzenden Längsränder.

Bei Zähler- und Verteilerschränken werden elektrische Geräte, insbesondere Sicherungsautomaten, derart angeordnet, daß ihre Vorderseite mit den Anzeige- oder Bedienelementen durch eine Öffnung in der Frontplatte hindurchragen. Die rückseitigen Anschlußelemente und die Verkabelung liegen verdeckt hinter der Frontplatte. Die Bereiche der Öffnung der Frontplatte, in denen keine Geräte angeordnet sind, werden mit Abdeckstreifen, auch Blindabdeckstreifen genannt, abgedeckt.

Derartige Abdeckstreifen sind in vielfältiger Form bekannt, beispielsweise aus der DE 195 13 439, der DE 32 33 263 oder der DE 33 02 530. Sie sind vorzugsweise in mehrere Segmente unterteilt, welche durch zueinander parallele Sollbruchlinien bestehend aus Einkerbungen oder Perforationen voneinander getrennt sind. Durch Abbrechen an den Sollbruchlinien können die Abdeckstreifen auf die gewünschte Länge gekürzt werden. Jedes Segment zwischen zwei Sollbruchlinien umfaßt in seinen Randbereichen je ein hakenförmiges Halteelement. Im Nachzählerbereich können die Halteelemente biegsam ausgebildet sein, so daß sie beim Eindrücken des Abdeckstreifens hinter den Längsrändern der Öffnung einrasten und von der Vorderseite mittels eines Werkzeuges wieder herausgezogen werden können. Alternativ können die Halteelemente starr oder verriegelbar ausgebildet sein, so daß sie nur von der Rückseite herausgelöst werden können. Hierdurch wird im Bereich vor dem Stromzähler sichergestellt, daß der Abdeckstreifen nicht durch eine unbefugte Person zum Anschluß eines Stromverbrauchers vor dem Zähler entfernt wird.

Sowohl die elektrischen Geräte als auch die Öffnung in der Frontplatte des Zähler- und Verteilerschranks werden mit Fertigungstoleranzen hergestellt. Die Öffnung ist daher mit einem gewissen Übermaß ausgelegt, um zuverlässig die erforderliche Höchstanzahl an Einbaugeräten aufzunehmen. Auch die Segmente der Abdeckstreifen sind so bemessen, daß sie beim Herausbrechen die Maße eines Einbaugerätes mit einem gewissen Spiel freilegen, um eine problemlose Montage zu ermöglichen. Hierbei entsteht in der Regel ein Spalt in Längsrichtung zwischen dem Abdeckstreifen und dem auf einer Seite angrenzenden Einbaugerät bzw. dem auf der anderen Seite angrenzenden Querrand der Öffnung in der Frontplatte. Zusätzlich kann ein Spalt durch unsauberes Abbrechen oder Abschneiden des Abdeckstreifens auf die erforderliche Länge entstehen. Derartige Spalte sind nicht nur optisch nachteilhaft, sie sind beim Überschreiten einer gewissen Breite (2,5 mm) nach den anzuwendenden deutschen Normen (VDE Norm) unzulässig.

Aufgabe der Erfindung ist es, einen Abdeckstreifen zu schaffen, der eine Vermeidung der genannten Spalte ermöglicht.

Diese Aufgabe wird erfindungsgemäß dadurch gelöst, daß der Abdeckstreifen an mindestens einem seiner beiden Endbereiche einen Deckabschnitt zum Überdecken des Querrandes der Öffnung sowie ein Anschlagselement aufweist, welches gegen den Querrand der Öffnung wirkt und in Längsrichtung verstellbar an dem Abdeckstreifen befestigt ist.

Der erfindungsgemäße Abdeckstreifen wird in den freien Bereich der Öffnung der Frontplatte eingesetzt werden, wobei der Deckabschnitt auf dem Randbereich der Frontplatte aufliegt, der an den Querrand der Öffnung angrenzt. Anschließend wird der Abdeckstreifen durch Verstellen seines Anschlages zum Querrand der Öffnung hin in diese Öffnung hineingeschoben, bis er bündig gegen das am gegenüberliegenden Ende des Abdeckstreifens liegende elektrische Gerät gedrückt ist. Dabei stützt sich das Anschlagselement gegen den Querrand der Öffnung ab. So wird auf besonders einfache Weise eine spaltfreie und optisch vorteilhafte Anordnung des Abdeckstreifens in der Öffnung bewirkt, die den deutschen Sicherheitsnormen entspricht.

Bei einer bevorzugten Ausführungsform besteht das Anschlagselement des Abdeckstreifens aus einem drehbar gelagerten Exzenter. Dieser sollte mit einem einfachen Schlitz oder einem Kreuzschlitz für den Eingriff eines Schraubendrehers versehen sein. Der Schlitz kann entweder auf der Vorderseite des Abdeckstreifens münden oder - wenn der Abdeckstreifen nur zur Montage von der Rückseite der Frontplatte aus vorgesehen ist - rückseitig angeordnet sein.

Vorzugsweise ist eine Bremseinrichtung vorgesehen, die eine der Verstellbewegung des Anschlagselements entgegenwirkende Bremskraft erzeugt. So gewährleistet das Anschlagselement den sicheren Halt des Abdeckstreifens in der bündig an die benachbarten elektrischen Geräte anliegenden Stellung. Im einfachsten Fall kann die Bremseinrichtung dadurch gebildet werden, daß die Aufnahme für das Anschlagselement ein Untermaß aufweist. Beim Eindrücken des Anschlagselements in diese Aufnahme verformt sich das Kunststoffmaterial des Abdeckstreifens elastisch, so daß die Reibungskraft zwischen Abdeckstreifen und Anschlagselement der Verstellbewegung entgegenwirkt.

Vorzugsweise wird der Abdeckstreifen mit einer Länge hergestellt, die größer ist als die Längserstreckung der Öffnung der Frontplatte. Er weist an beiden Enden ein Anschlagselement auf, wobei der Abstand zwischen den beiden vollständig zu den benachbarten Enden des Abdeckstreifens verschobenen Anschlagselementen größer ist als die Längserstreckung der Öffnung. Auf diese Weise kann der Abdeckstreifen zur vollständigen Abdeckung einer Öffnung verwendet werden, falls diese keine elektrischen Geräte aufnimmt. Weiterhin können bei der Anordnung elektrischer Geräte im mittleren Bereich der Öffnung mehrere mittlere Segmente des Abdeckstreifens herausgebrochen werden, wobei die beiden seitlichen Abschnitte des Abdeckstreifens durch die Anschlagselemente an ihren Enden jeweils fest zwischen dem benachbarten Querrand der Öffnung und dem auf der anderen Seite angrenzenden elektrischen Gerät eingespannt werden können.

Der Verstellbereich des Anschlagselements sollte kleiner sein als die Erstreckung des Deckabschnitts in Längsrichtung, damit eine Ausbildung eines Spaltes zwischen dem Querrand der Öffnung und der Abschlußkante des Abdeckstreifens bei Verstellen des Anschlagselementes in seine äußerste Position vermieden wird.

Weiterhin sollte der Verstellbereich des Anschlagselements größer gewählt werden als die Erstreckung eines der herausbrechbaren Segmente des Abdeckstreifens, so daß nach dem Kürzen des Abdeckstreifens auf eine Länge, die mit dem kleinstmöglichen Spiel in den freien Bereich der Öffnung der Frontplatte einsetzbar ist, zuverlässig das Verstellen des Anschlagselements bis zum bündigen Anliegen des Abdeckstreifens an dem benachbarten elektrischen Gerät möglich ist.

Mindestens ein Paar von Halteelementen kann in Längsrichtung kleiner als die Hälfte der Länge des diese Halteelemente tragenden Segmentes ausgebildet sein. Hierdurch wird das Verschließen sehr kleiner Spalte zwischen einem elektrischen Gerät und dem Querrand der Öffnung der Frontplatte ermöglicht. Die schmalen Halteelemente können in diesen kleinen Spalt eingefügt werden, wobei der Abschnitt des Segmentes, der keine Halteelemente aufweist, den Querrand der Öffnung abdeckt.

Weitere Vorzüge und Merkmale der Erfindung ergeben sich aus den Unteransprüchen und aus der folgenden Zeichnungsbeschreibung. Die Zeichnungen zeigen in:
- Fig. 1: eine Seitenansicht des erfindungsgemäßen Abdeckstreifens,
- Fig. 2: die Vorderansicht des Abdeckstreifens aus Fig. 1,
- Fig. 3: die andere Seitenansicht des Abdeckstreifens aus Fig. 1,
- Fig. 4: die Unteransicht des Abdeckstreifens aus den vorangehenden Figuren,
- Fig. 5: eine vergrößerte, geschnittene Darstellung einer Aufnahmeöffnung für ein Anschlagselement des Abdeckstreifens,
- Fig. 6: eine vergrößerte Seitenansicht des Anschlagselementes und
- Fig. 7: die Vorderansicht des Anschlagselementes aus Fig. 6.

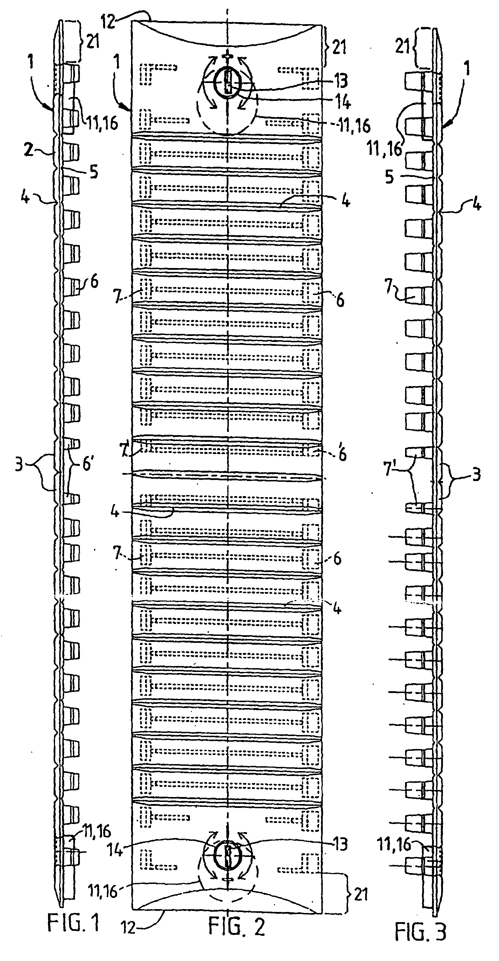

Der in Fig. 1-4 dargestellte Abdeckstreifen 1 besteht aus mehreren Segmenten 2,3, welche durch zueinander parallel verlaufende Einkerbungen 4, welche Sollbruchlinien bilden, voneinander getrennt sind. Den Einkerbungen 4 auf der Vorderseite des Abdeckstreifens 1 liegen rückseitig kleine Einkerbungen 5 gegenüber, damit die notwendige Kraft zum Abbrechen eines Segmentes ausreichend herabgesetzt ist und eine saubere Bruchkante entsteht.

Die Segmente 2,3 weisen auf der Rückseite jeweils außen liegende Halteelemente 6,7 bzw. 6',7' auf, welche zum Hintergreifen der Längsränder einer Öffnung in der Frontplatte eines Zähler- und Verteilerschranks vorgesehen sind. Die Halteelemente 6,6' sind feststehend ausgebildet und weisen eine lange Haltefläche auf, die hinter den Längsrand der Öffnung geschoben werden muß. Die Halteelemente 7,7' sind elastisch ausgebildet und weisen eine kurze Rastfläche 9 und eine Schrägfläche 10 auf, so daß der Abdeckstreifen 1 nach dem Einschieben des einen Längsrandes der Öffnung unter die Haltefläche 8 der feststehenden Halteelemente 6,6' vollständig in die Öffnung eingedrückt werden kann, wobei der zweite Querrand entlang der Schrägfläche 10 der elastischen Halteelemente 7,7' gleitet, welche schließlich aufgrund ihrer Eigenelastizität nach außen federn und den zweiten Längsrand der Öffnung mit ihrer Rastfläche 9 hintergreifen.

Die an die mittlere Einkerbung 4 angrenzenden Segmente 3 des Abdeckstreifens 1 weisen sehr schmale Halteelemente 6',7' auf, deren Breite geringer ist als die Hälfte der Erstreckung der Segmente 3 in Längsrichtung des Abdeckstreifens 1. Wie oben beschrieben, können diese Segmente nach dem Herausbrechen zum Abdecken kleiner Spalte an den Endbereichen der Öffnung in der Frontplatte genutzt werden.

An seinen beiden Enden weist der Abdeckstreifen 1 je ein als Exzenter 11 ausgebildetes Anschlagselement auf. Der in Fig. 2 oben dargestellte Exzenter 11 ist so gedreht, daß sein Umfang den größtmöglichen Abstand zur Abschlußkante 12 des Abdeckstreifens 1 aufweist. Bei dieser Exzenterstellung kann der gesamte Deckabschnitt 21 des Abdeckstreifens 1 über den Querrand der Öffnung geschoben werden. Der Exzenter 11 am unteren Ende des Abdeckstreifens weist den kleinsten Abstand zur Abschlußkante 12 auf und erstreckt sich fast vollständig in Längsrichtung über den Deckabschnitt 21. Zwischen diesen beiden Extremstellungen kann der Abstand zwischen der querverlaufenden Abschlußkante 12 des Abdeckstreifens 1 und dem Umfang des Exzenters 11 in Längsrichtung kontinuierlich verstellt werden.

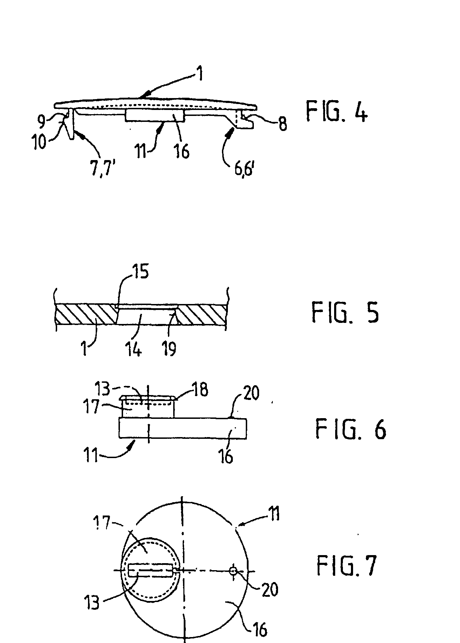

Zum Verstellen ist der Exzenter 11 mit einem Schlitz 13 für den Eingriff der Klinge eines Schraubendrehers versehen. Die Einzelheiten des Exzenters 11 und seiner Aufnahme in den Abdeckstreifen ergeben sich aus den vergrößerten Darstellungen der Fig. 5-7. Die Aufnahmeöffnung 14 in dem Abdeckstreifen 1 weist eine ringförmige Abstufung 15 auf. Der Exzenter 11 besteht aus einem kreisförmigen Anschlagskörper 16, der einstückig mit einem exzentrisch angeordneten zylindrischen Zapfen 17 verbunden ist. Das freie Ende des Zapfens 17 weist einen radial hervorstehenden Kragen 18 auf, der beim Eindrücken in die Aufnahmeöffnung 14 hinter der radialen Abstufung 15 einrastet. Um das Eindrücken und Einrasten des radialen Kragens 18 in die Aufnahmeöffnung 14 zu erleichtern, ist die Wandung 19 der Aufnahmeöffnung 14 kegelförmig geneigt und die vordere Stirnfläche des Kragens 18 abgeschrägt.

Bei dieser Anordnung ist es nicht möglich, die Aufnahmeöffnung 14 mit einem großen Untermaß bezüglich des Zapfens 17 auszuführen, welches einen spielfreien, festen Sitz des Zapfens 17 in der Aufnahmeöffnung 14 gewährleisten würde. Stattdessen ist an der Fläche des Anschlagskörpers 16, die der Rückseite des Abdeckstreifens 1 zugewandt ist, ein Vorsprung 20 vorgesehen, welcher beim vollständigen Eindrücken des Zapfens 17 in die Aufnahmeöffnung 14 den Anschlagskörper 16 elastisch verformt und durch Reibung mit der Rückseite des Abdeckstreifens 1 eine Bremskraft erzeugt, die dem ungewollten Verstellen des Exzenters 11 entgegenwirkt. Darüberhinaus können Rastausnehmungen auf der Rückseite des Abdeckstreifens 1 angeordnet werden, welche zur Aufnahme des Vorsprungs 20 konzentrisch um die Mitte der Aufnahmeöffnung 14 angeordnet sind und ein Einrasten des Exzenters 11 in einer bestimmten Drehposition bewirken.

### Bezugszeichen:

- 1: Abdeckstreifen
- 2: Segment
- 3: Segment
- 4: Sollbruchlinie, Einkerbung
- 5: kleine Einkerbung
- 6,6': feststehendes Halteelement
- 7,7': elastisches Halteelement
- 8: Haltefläche
- 9: Rastfläche
- 10: Schrägfläche
- 11: Anschlagselement, Exzenter
- 12: Abschlußkante
- 13: Schlitz
- 14: Aufnahmeöffnung
- 15: Abstufung
- 16: Anschlagskörper
- 17: Zapfen
- 18: Kragen
- 19: Wandung
- 20: Bremseinrichtung, Vorsprung
- 21: Deckabschnitt

## Patentansprüche

1. Abdeckstreifen (1) zum Verschließen von in Frontplatten befindlichen Öffnungen von elektrischen Zähler- und Verteilerschränken, mit rückseitig angeordneten und paarweise einander zugeordneten Halteelementen (6,7; 6',7') zum Hintergreifen der beiden die Öffnung in der Frontplatte begrenzenden Längsränder, **dadurch gekennzeichnet, daß** der Abdeckstreifen (1) an mindestens einem seiner beiden Endbereiche einen Deckabschnitt (21) zum Überdecken des Querrandes der Öffnung sowie ein Anschlagselement (11) aufweist, welches gegen den Querrand der Öffnung wirkt und in Längsrichtung verstellbar an dem Abdeckstreifen (1) befestigt ist.

2. Abdeckstreifen (1) nach Anspruch 1, **dadurch gekennzeichnet, daß** das Anschlagselement aus einem drehbar im Abdeckstreifen (1) gelagerten Exzenter (11) besteht.

3. Abdeckstreifen nach Anspruch 2, **dadurch gekennzeichnet, daß** der Exzenter (11) mindestens einen Schlitz (13) für den Eingriff eines Schraubendrehers aufweist.

4. Abdeckstreifen nach mindestens einem der vorangehenden Ansprüche, **dadurch gekennzeichnet, daß** eine Bremseinrichtung (20) vorgesehen ist, die eine der Verstellbewegung des Anschlagselements (11) entgegenwirkende Bremskraft erzeugt.

5. Abdeckstreifen nach mindestens einem der vorangehenden Ansprüche, **dadurch gekennzeichnet, daß** der Verstellbereich des Anschlagselements (11) kleiner ist als die Erstreckung des Deckabschnitts (21) in Längsrichtung.

6. Abdeckstreifen (1) nach mindestens einem der vorangehenden Ansprüche, bei dem jedes Paar einander zugeordneter Halteelemente (6,7; 6',7') auf einem Segment (2;3) des Abdeckstreifens (1) angeordnet ist, welches von zwei querverlaufenden, zueinander parallelen Sollbruchlinien (4) begrenzt ist, **dadurch gekennzeichnet, daß** der Verstellbereich des Anschlagselements (11) mindestens der Erstreckung eines Segments (2;3) in Längsrichtung entspricht.

7. Abdeckstreifen (1) nach Anspruch 5, **dadurch gekennzeichnet, daß** die Erstreckung mindestens eines Paares von Halteelementen (6',7') in Längsrichtung kleiner ist als die Hälfte der Länge des diese Halteelemente (6',7') tragenden Segmentes (3).

8. Abdeckstreifen (1) nach mindestens einem der vorangehenden Ansprüche, **dadurch gekennzeichnet, daß** seine Länge zumindest der Gesamterstreckung der Öffnung in der Frontplatte in Längsrichtung entspricht.

9. Abdeckstreifen (1) nach mindestens einem der vorangehenden Ansprüche, **dadurch gekennzeichnet, daß** in seiner Mitte eine Sollbruchlinie (4) zwischen zwei Segmenten (3) angeordnet ist und daß er zu dieser Sollbruchlinie (4) symmetrisch ausgebildet ist.

10. Abdeckstreifen (1) nach mindestens einem der vorangehenden Ansprüche, mit einem Anschlagselement (11) an jedem seiner Enden, **dadurch gekennzeichnet, daß** der Abstand zwischen den beiden Anschlagselementen (11) in Längsrichtung zwischen einem großen und einem kleinen Abstand verstellbar ist, wobei der große Abstand größer und der kleine Abstand kleiner ist als die Gesamterstreckung der Öffnung in der Frontplatte in Längsrichtung.

## Claims

1. A cover strip (1) for sealing openings of electrical meter and distribution cubicles located in front plates, with holding elements (6,7; 6',7') arranged on the rear and assigned to one another in pairs for gripping behind both longitudinal edges delimiting the opening in the front plate, **characterised in that** the cover strip (1) has a cover section (21) for covering the transverse edge of the opening and a stop element (11) on at least one of both its end regions, which acts against the transverse edge of the opening and is fastened displaceably in the longitudinal direction on the cover strip (1).

2. The cover strip (1) as claimed in Claim 1, **characterised in that** the stop element comprises an eccentric (11) swivel-mounted in the cover strip (1).

3. The cover strip as claimed in Claim 2, **characterised in that** the eccentric (11) has at least one slot (13) for engaging a screwdriver.

4. The cover strip as claimed in any one of the foregoing claims, **characterised in that** a braking device (20) is provided, which generates a braking force working against the displacement motion of the stop element (11).

5. The cover strip as claimed in any one of the foregoing claims, **characterised in that** the displaceability of the stop element (11) is less than the extension of the cover section (21) in the longitudinal direction.

6. The cover strip (1) as claimed in any one of the foregoing claims, in which each pair of mutually assigned holding elements (6,7; 6',7') is arranged on a segment (2;3) of the cover strip (1), which is limited by two transverse, parallel predetermined break lines (4), **characterised in that** the displacement region of the stop element (11) corresponds at least to the extension of a segment (2;3) in the longitudinal direction.

7. The cover strip (1) as claimed in Claim 5, **characterised in that** the extension of at least one pair of holding elements (6',7') is less in the longitudinal direction than half the length of the segment (3) bearing these holding elements (6',7').

8. The cover strip (1) as claimed in any one of the foregoing claims, **characterised in that** its length corresponds at least to the overall extension of the opening in the front plate in the longitudinal direction.

9. The cover strip (1) as claimed in any one of the foregoing claims, **characterised in that** in its centre a predetermined break line (4) is arranged between two segments (3) and **in that** it is configured symmetrically to this predetermined break line (4).

10. The cover strip (1) as claimed in any one of the foregoing claims, with a stop element (11) at each of its ends, **characterised in that** the distance between both stop elements (11) can be moved in the longitudinal direction between a large and a small distance, whereby the large distance is greater and the small distance is less than the overall extension of the opening in the front plate in the longitudinal direction.

## Revendications

1. Bande de recouvrement (1) pour obturer des ouvertures situées sur des plaques frontales de boîtiers de compteurs et de distributeurs électriques, avec des éléments d'arrêt (6, 7 ; 6', 7') disposés sur la face arrière par paires adjointes pour s'accrocher derrière les bords longitudinaux qui délimitent l'ouverture dans la plaque frontale, **caractérisé en ce que** la bande de recouvrement (1) présente sur au moins une de ses deux extrémités une portion de recouvrement (21) pour recouvrir le bord transversale de l'ouverture ainsi qu'un élément de butée (11), lequel se presse contre le bord transversale de l'ouverture et est fixé sur la bande de recouvrement (1) de manière réglable dans le sens longitudinal.

2. Bande de recouvrement (1) selon la revendication 1, **caractérisée en ce que** l'élément de butée est constitué d'une tige (11) rotative montée à l'intérieur de la bande de recouvrement (1).

3. Bande de recouvrement selon la revendication 2, **caractérisée en ce que** la tige (11) présente au moins une fente (13) pour permettre l'engagement d'un tournevis.

4. Bande de recouvrement selon au moins une des revendications précédentes, **caractérisée en ce qu'** un dispositif de freinage (20) est prévu, lequel produit un effort de freinage qui contrebalance le mouvement de réglage de l'élément de butée (11).

5. Bande de recouvrement selon au moins une des revendications précédentes, **caractérisée en ce que** la zone de réglage de l'élément de butée (11) est inférieure à l'étendue de la portion de recouvrement (21) dans le sens de la longueur.

6. Bande de recouvrement (1) selon au moins une des revendications précédentes, dans laquelle chaque paire d'éléments d'arrêt (6, 7 ; 6', 7') se faisant face l'une l'autre est disposée sur un segment (2 ; 3) de la bande de recouvrement (1), lequel est délimité par deux lignes en creux (4) transversales, parallèles l'une à l'autre, **caractérisé en ce que** la zone de réglage de l'élément de butée (11) correspond au moins à l'étendue d'un segment (2 ; 3) dans le sens de la longueur.

7. Bande de recouvrement (1) selon la revendication 5, **caractérisée en ce que** l'étendue d'au moins une paire d'éléments d'arrêt (6', 7') dans le sens de la longueur est inférieure à la moitié de la longueur du segment de support (3) desdits éléments d'arrêt (6', 7').

8. Bande de recouvrement (1) selon au moins une des revendications précédentes, **caractérisée en ce que** sa longueur correspond au moins à l'étendue totale de l'ouverture sur la plaque frontale dans le sens de la longueur.

9. Bande de recouvrement (1) selon au moins une des revendications précédentes, **caractérisée en ce qu'**une ligne en creux (4) est disposée en son centre entre deux segments (3) et que la bande de recouvrement est montée symétriquement à ladite ligne en creux (4).

10. Bande de recouvrement (1) selon au moins une des revendications précédentes, avec un élément de butée (11) à chacune de ses extrémités, **caractérisée en ce que** l'intervalle entre les deux éléments de butée (11) dans le sens de la longueur est réglable à un grand intervalle et à un petit intervalle, dans lesquels le grand intervalle est supérieur et le petit intervalle est inférieur à l'étendue totale de l'ouverture sur la plaque frontale dans le sens de la longueur.
